# EUROPEAN PATENT APPLICATION

(11) **EP 4 568 202 A1**
(43) Date of publication of application: **11.06.2025**
(21) Application number: 22956082.6
(22) Date of filing: 25.08.2022
(51) Int. Cl.: H04L 27/00

(54) **INFORMATION TRANSMISSION METHOD AND APPARATUS, CHIP, CHIP MODULE, AND STORAGE MEDIUM**

(71) Applicant: Huawei Technologies Co., Ltd., Shenzhen, Guangdong 518129 (CN)
(72) Inventor: WANG, Jun, Shenzhen, Guangdong 518129 (CN); PENG, Chenghui, Shenzhen, Guangdong 518129 (CN); WANG, Fei, Shenzhen, Guangdong 518129 (CN); LIU, Zhe, Shenzhen, Guangdong 518129 (CN)
(74) Representative: Pfenning, Meinig & Partner mbB
(86) International application number: PCT/CN2022/114922
(87) International publication number: WO 2024/040536

(57) **Abstract**

This application discloses an information transmission method and apparatus, a chip, a chip module, and a storage medium. A terminal obtains reporting indication information, where the reporting indication information indicates reporting precision; and the terminal reports first information based on a reporting mode and/or the reporting indication information, so that the terminal can report information in a timely manner. This reduces waiting time on a network side, and reduces discarding of reporting of the terminal.

## Description

### TECHNICAL FIELD

This application relates to the field of communication technologies, and in particular, to an information transmission method and apparatus, a chip, a chip module, and a storage medium.

### BACKGROUND

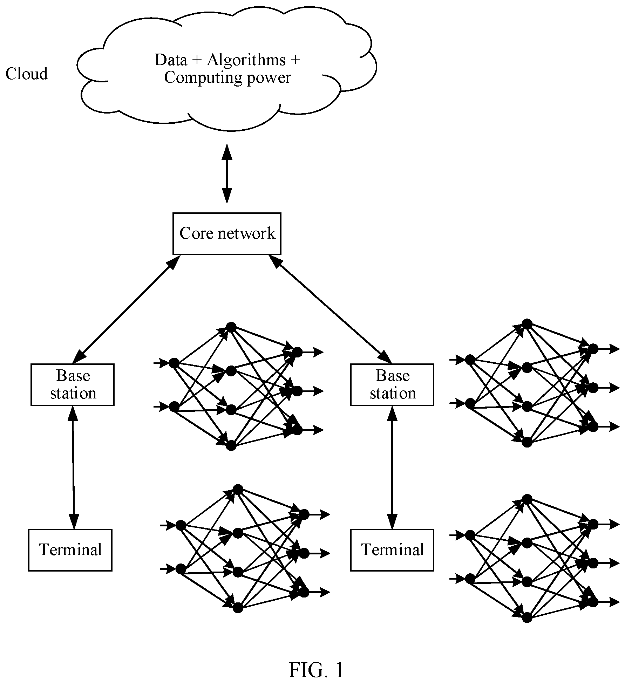

FIG. 1 is a diagram of an architecture of cloud artificial intelligence (artificial intelligence, AI). In a 5^{th} generation (5^{th} generation, 5G) mobile communication network, to obtain a coordination gain, a terminal or a base station reports all data to a unified server, and the server performs centralized collaborative AI training and inference, and applies an inference structure to each network element in the 3^{rd} generation partnership project (3^{rd} generation partnership project, 3GPP). However, although this practice can be used to obtain the coordination gain, the terminal or the base station needs to upload a large amount of data to the server, causing transmission consumption, a long delay, low security (data leakage), a slow coordination speed (a failure to adapt to a quick change of a network environment), and other problems.

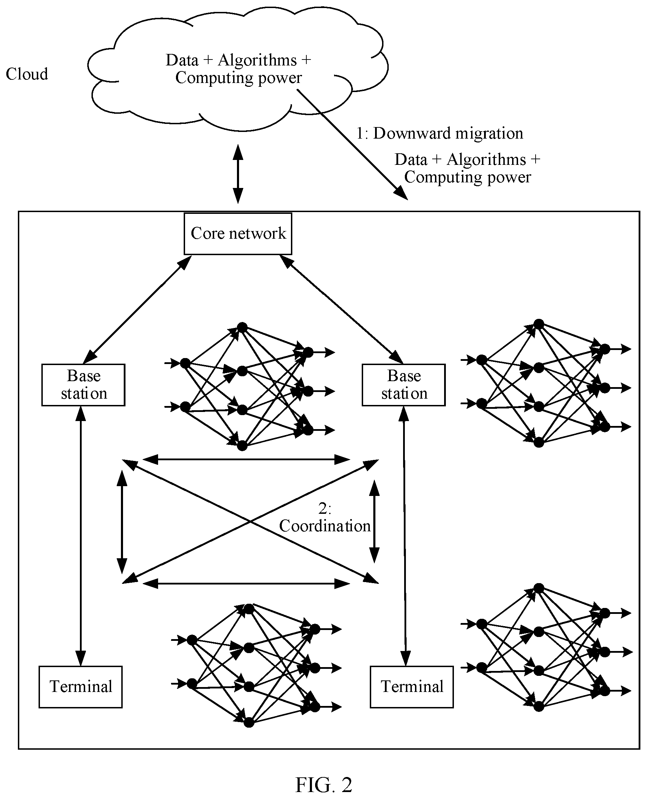

To resolve the defects in the 5G AI implementation solution, a next generation mobile communication network is expected to endogenously support AI. As shown in FIG. 2, data, algorithms, computing power, and the like that are originally on a cloud or a centralized server are migrated down to a 3GPP network, in other words, a complete AI environment (including data, algorithms, and computing power) is provided in the 3GPP network, so that the next generation mobile communication network endogenously/natively supports multipoint coordination.

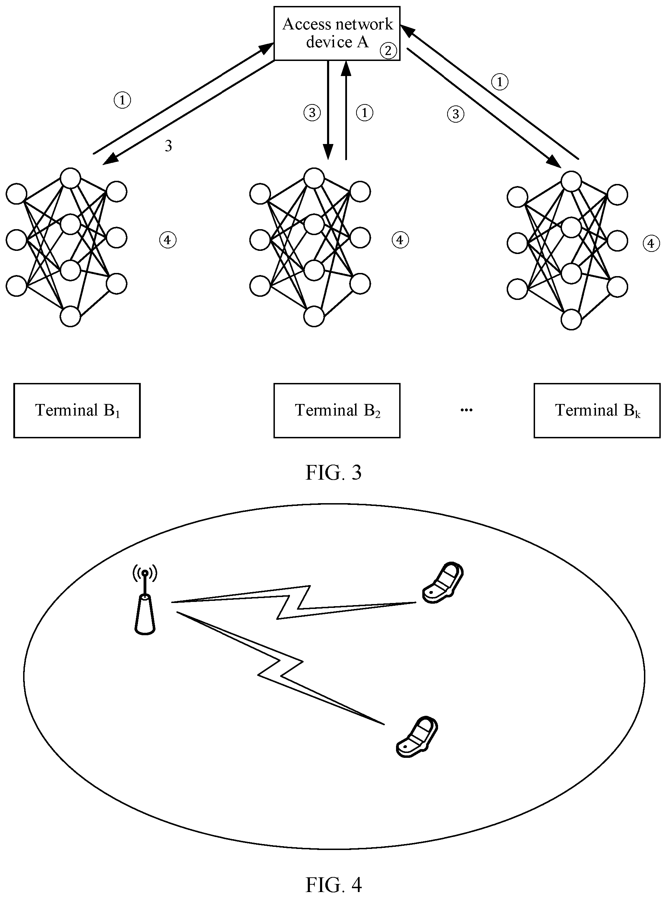

In the cloud AI, federated learning (federated learning, FL) may be used to protect data privacy of the terminal. Learning may be performed by using the data of the terminal without directly uploading the data of the terminal. A possible example of a federated learning solution in which the cloud AI is directly used in a network is shown in FIG. 3, which is a schematic flowchart of performing federated learning by an access network device and multiple terminals. A terminal B₁, a terminal B₂, ..., and a terminal Bₖ report respective gradient information of the terminal B₁, the terminal B₂, ..., and the terminal Bₖ to an access network device A (referred to as procedure ①). The access network device A performs gradient aggregation on the collected gradient information reported by the one or more terminals, and updates an AI model, to obtain a new AI model through learning (referred to as procedure ②). The access network device A delivers the updated AI model to each terminal (referred to as procedure ③), and each terminal replaces its currently used AI model with the new model received from the access network device A, for next-step training and gradient calculation (referred to as procedure ④). The terminal may perform a next round of training, and perform gradient calculation and reporting.

However, in a wireless network, different terminals have different channel conditions (different bandwidths/rates), and time consumed for reporting the gradient information in the foregoing procedure ① varies greatly. A current practice is as follows. Server A waits for the gradient information of all the terminals to be reported and summarized, but a next learning periodicity is delayed; or server A discards gradient information of a terminal with a low reporting speed, but information used by server A for learning is incomplete. This directly reduces a convergence speed (convergence time increases).

In view of this, how to flexibly perform information transmission or reporting in the wireless network is a problem to be resolved in this application.

### SUMMARY

This application provides an information transmission method and apparatus, a chip, a chip module, and a storage medium, to flexibly perform information transmission, reduce waiting time on a network side, and reduce discarding of reporting of a terminal.

According to a first aspect, an information transmission method is provided. The method includes: obtaining reporting indication information, where the reporting indication information indicates reporting precision; and reporting first information based on a reporting mode and/or the reporting indication information, where the reporting mode includes an incremental reporting mode.

In this aspect, a terminal obtains the reporting indication information, where the reporting indication information indicates the reporting precision; and the terminal reports the first information based on the reporting mode and/or the reporting indication information, so that the terminal can report information in a timely manner. This reduces waiting time on a network side, and reduces discarding of reporting of the terminal.

In a possible implementation, the reporting precision indicates quantization precision of the first information.

In this implementation, before reporting information, a terminal needs to perform quantization processing on the information, to reduce signaling overheads and reduce processing complexity of the terminal and a network side. The reporting precision indicates the quantization precision of the first information, and the terminal performs quantization processing on the information based on the quantization precision.

In another possible implementation, before the reporting first information based on a reporting mode and/or the reporting indication information, the method further includes: quantizing the first information based on the reporting precision.

In still another possible implementation, the first information is information obtained by performing quantization based on the reporting precision. The quantization includes an operation such as encoding.

In still another possible implementation, the first information is quantized in at least one of the following manners: a quantity of digits after a decimal point of a value of the first information, and a quantity of bits used to represent the first information.

In this implementation, the reporting indication information may indicate the terminal to accurately specify, after quantizing the first information, a quantity of digits after the decimal point or a quantity of bits used to represent the first information. All these manners affect reporting timeliness of the terminal. If a current channel status of the terminal is good, the reporting indication information indicates the terminal to quantize the first information with high precision and report the first information, and a network side may obtain complete and accurate first information. If a current channel status of the terminal is poor, the reporting indication information indicates the terminal to quantize the first information with low precision and report the first information, so that it can be ensured that the terminal can report the first information and reporting of the terminal is not discarded.

In still another possible implementation, the reporting indication information indicates a first correspondence between one or more pieces of reporting precision and one or more application conditions of the reporting precision. The method further includes: determining the reporting precision of the first information based on the first correspondence and an application condition of first reporting precision.

In this implementation, a network side may indicate the first correspondence between the one or more pieces of reporting precision and the one or more application conditions of the reporting precision. A terminal determines the reporting precision of the first information based on the first correspondence and the current corresponding application condition of the first reporting precision. The first correspondence may be semi-statically configured, and does not need to be dynamically configured. This reduces signaling overheads.

In still another possible implementation, the application condition of the reporting precision includes at least one of the following: a channel status of a terminal, power information of the terminal, computing power of the terminal, and load information of the terminal.

In this implementation, reporting precision of the terminal may be affected by all of the channel status of the terminal, the power information of the terminal, the computing power of the terminal, the load information of the terminal, and the like. Therefore, the terminal determines the reporting precision of the corresponding first information based on the channel status, power, computing power, load, and the like of the terminal, so that when the application condition of the reporting precision is poor, it can be ensured that the terminal can report the first information and reporting of the terminal is not discarded. In addition, when the application condition of the reporting precision is good, the terminal quantizes the first information with high precision and reports the first information, so that a network side can obtain complete and accurate first information.

In still another possible implementation, the reporting mode further includes a one-time reporting mode, and the one-time reporting mode indicates to report the first information once.

In still another possible implementation, the reporting indication information further indicates a quantization error threshold, and the method further includes: when an error between a quantized value and an actual value of the first information is greater than or equal to the quantization error threshold, reporting exception information. Alternatively, the reporting indication information further indicates a quantization error threshold and an exception proportion threshold, and the method further includes: when a proportion of information quantized as abnormal in multiple pieces of to-be-reported first information exceeds the exception proportion threshold, reporting the exception information, where if an error between a quantized value and an actual value of any one of the multiple pieces of first information is greater than or equal to the quantization error threshold, quantization is abnormal, where the quantized value is a value obtained by processing the first information based on the reporting precision.

In this implementation, the reporting indication information further indicates the quantization error threshold, or the quantization error threshold and the exception proportion threshold. The terminal quantizes the first information based on the reporting precision indicated by the reporting indication information. However, when the error between the quantized value and the actual value of the first information is greater than or equal to the quantization error threshold, or the proportion of the information quantized as abnormal in the multiple pieces of to-be-reported first information exceeds the exception proportion threshold, the terminal reports the exception information. An access network device receives the exception information, and may determine that the indicated reporting precision is improper, so that the reporting precision can be updated.

In still another possible implementation, the reporting mode is the incremental reporting mode, the first information includes basic information and at least one piece of incremental information, and the reporting indication information further indicates at least one of the following incremental reporting parameters: a quantity of training rounds of a model, reporting precision of the basic information, a quantity of reporting times of incremental reporting, reporting precision of incremental information reported each time, reporting duration, a quantization error threshold corresponding to the basic information, and a quantization error threshold corresponding to each of the at least one piece of incremental information.

In this implementation, the reporting mode is the incremental reporting mode. The incremental reporting mode is used. When the application condition of the reporting precision is poor, the terminal reports the basic information and/or the at least one piece of incremental information. This reduces discarding of reporting of the terminal.

In still another possible implementation, the incremental information reported each time is related to importance and/or a priority of the first information.

In this implementation, when the incremental reporting mode is used, information with high importance or a high priority may be preferentially reported, and then information with low importance or a low priority is reported, to ensure that an access network device can receive at least the information with high importance or a high priority.

In still another possible implementation, the reporting first information based on a reporting mode and/or the reporting indication information includes: reporting the basic information of the first information based on the reporting precision of the basic information; and reporting the at least one piece of incremental information of the first information in sequence based on the reporting precision of the incremental information reported each time, where a quantity of reporting times of the at least one piece of incremental information is less than or equal to the quantity of reporting times of the incremental reporting indicated by the reporting indication information.

In still another possible implementation, the reporting first information based on a reporting mode and/or the reporting indication information includes: starting a timer, where duration of the timer is the reporting duration; reporting the basic information of the first information based on the reporting precision of the basic information; and reporting, within the reporting duration, the at least one piece of incremental information of the first information in sequence based on the reporting precision of the incremental information reported each time.

In this implementation, the terminal sets the timer, and the terminal reports the basic information and the at least one piece of incremental information of the first information within the timing duration, so that incremental reporting time can be properly controlled.

In still another possible implementation, when the timer stops timing, the method further includes at least one of the following: stopping reporting the basic information of the first information; stopping reporting the at least one piece of incremental information of the first information; discarding the basic information that is of the first information and that has been processed but has not been reported; or discarding the at least one piece of incremental information that is of the first information and that has been processed but has not been reported.

In still another possible implementation, the method further includes: receiving configuration information, where the configuration information includes a second correspondence between one or more reporting modes and one or more mode application conditions; and determining, based on the second correspondence and a first mode application condition, the reporting mode corresponding to the first mode application condition.

In this implementation, the reporting mode includes the one-time reporting mode, the incremental reporting mode, and the like. For example, the one-time reporting mode is applicable to a scenario in which a rate of the terminal changes slowly; and the incremental reporting mode is applicable to a scenario in which a rate of the terminal changes quickly. An access network device configures the second correspondence between the one or more reporting modes and the one or more mode application conditions. The terminal determines the corresponding reporting mode based on the current first mode application condition, so that the reporting mode can be properly selected. This improves reliability of information transmission.

According to a second aspect, an information transmission method is provided. The method includes: sending reporting indication information, where the reporting indication information indicates reporting precision; receiving reported first information, where the first information is reported based on a reporting mode and/or the reporting indication information; and processing the first information based on the reported first information.

In this aspect, the reporting indication information is sent to a terminal, where the reporting indication information indicates the reporting precision, so that the terminal reports the first information based on the reporting mode and/or the reporting indication information, and the first information can be received in a timely manner. This reduces waiting time on a network side, and reduces discarding of reporting of the terminal.

In a possible implementation, the reporting precision indicates quantization precision of the first information.

In another possible implementation, the first information is quantized in at least one of the following manners: a quantity of digits after a decimal point of a value of the first information, and a quantity of bits used to represent the first information.

In still another possible implementation, the reporting indication information indicates a first correspondence between one or more pieces of reporting precision and one or more application conditions of the reporting precision.

In still another possible implementation, the application condition of the reporting precision includes at least one of the following: a channel status of a terminal, power information of the terminal, computing power of the terminal, and load information of the terminal.

In still another possible implementation, the reporting mode further includes a one-time reporting mode, and the one-time reporting mode indicates to report the first information once.

In still another possible implementation, the reporting indication information further indicates a quantization error threshold, and the method further includes: when an error between a quantized value and an actual value of the first information is greater than or equal to the quantization error threshold, receiving reported exception information. Alternatively, the reporting indication information further indicates a quantization error threshold and an exception proportion threshold, and the method further includes: when a proportion of information quantized as abnormal in multiple pieces of to-be-reported first information exceeds the exception proportion threshold, receiving reported exception information, where if an error between a quantized value and an actual value of any one of the multiple pieces of first information is greater than or equal to the quantization error threshold, quantization is abnormal, where the quantized value is a value obtained by processing the first information based on the reporting precision.

In still another possible implementation, the reporting mode is an incremental reporting mode, the first information includes basic information and at least one piece of incremental information, and the reporting indication information further indicates at least one of the following incremental reporting parameters: a quantity of training rounds of a model, reporting precision of the basic information, a quantity of reporting times of incremental reporting, reporting precision of incremental information reported each time, reporting duration, a quantization error threshold corresponding to the basic information, and a quantization error threshold corresponding to each of the at least one piece of incremental information.

In still another possible implementation, the incremental information reported each time is related to importance and/or a priority of the first information.

In still another possible implementation, the reporting first information based on a reporting mode and/or the reporting indication information includes: receiving the reported basic information of the first information based on the reporting precision of the basic information; and receiving, based on the reporting precision of the incremental information reported each time, the at least one piece of incremental information that is of the first information and that is reported in sequence, where a quantity of reporting times of the at least one piece of incremental information is less than or equal to the quantity of reporting times of the incremental reporting indicated by the reporting indication information. In addition, the processing the first information based on the reported first information includes: combining the received basic information of the first information and the received at least one piece of incremental information of the first information.

In still another possible implementation, the method further includes: processing, based on reporting precision corresponding to multiple pieces of first information reported by multiple terminals and weights corresponding to the reporting precision, the multiple pieces of first information reported by the multiple terminals.

In still another possible implementation, the method further includes: sending configuration information, where the configuration information includes a second correspondence between one or more reporting modes and one or more mode application conditions.

According to a third aspect, an information transmission apparatus is provided, and may implement the information transmission method in the first aspect. For example, the information transmission apparatus may be a chip or a terminal. The foregoing method may be implemented by software, hardware, or hardware executing corresponding software.

In a possible implementation, the information transmission apparatus includes a transceiver unit and a processing unit. The transceiver unit is configured to obtain reporting indication information, where the reporting indication information indicates reporting precision. In addition, the transceiver unit is configured to report first information based on a reporting mode and/or the reporting indication information, where the reporting mode includes an incremental reporting mode.

Optionally, the reporting precision indicates quantization precision of the first information.

Optionally, the first information is quantized in at least one of the following manners: a quantity of digits after a decimal point of a value of the first information, and a quantity of bits used to represent the first information.

Optionally, the reporting indication information indicates a first correspondence between one or more pieces of reporting precision and one or more application conditions of the reporting precision. The processing unit is configured to determine the reporting precision of the first information based on the first correspondence and an application condition of first reporting precision.

Optionally, the application condition of the reporting precision includes at least one of the following: a channel status of the terminal, power information of the terminal, computing power of the terminal, and load information of the terminal.

Optionally, the reporting mode further includes a one-time reporting mode, and the one-time reporting mode indicates to report the first information once.

Optionally, the reporting indication information further indicates a quantization error threshold, and the transceiver unit is further configured to: when an error between a quantized value and an actual value of the first information is greater than or equal to the quantization error threshold, report exception information. Alternatively, the reporting indication information further indicates a quantization error threshold and an exception proportion threshold, and the transceiver unit is further configured to: when a proportion of information quantized as abnormal in multiple pieces of to-be-reported first information exceeds the exception proportion threshold, report the exception information, where if an error between a quantized value and an actual value of any one of the multiple pieces of first information is greater than or equal to the quantization error threshold, quantization is abnormal, where the quantized value is a value obtained by processing the first information based on the reporting precision.

Optionally, the reporting mode is the incremental reporting mode, the first information includes basic information and at least one piece of incremental information, and the reporting indication information further indicates at least one of the following incremental reporting parameters: a quantity of training rounds of a model, reporting precision of the basic information, a quantity of reporting times of incremental reporting, reporting precision of incremental information reported each time, reporting duration, a quantization error threshold corresponding to the basic information, and a quantization error threshold corresponding to each of the at least one piece of incremental information.

Optionally, the incremental information reported each time is related to importance and/or a priority of the first information.

Optionally, the transceiver unit is further configured to report the basic information of the first information based on the reporting precision of the basic information. The transceiver unit is further configured to report the at least one piece of incremental information of the first information in sequence based on the reporting precision of the incremental information reported each time, where a quantity of reporting times of the at least one piece of incremental information is less than or equal to the quantity of reporting times of the incremental reporting indicated by the reporting indication information.

Optionally, the processing unit is further configured to start a timer, where duration of the timer is the reporting duration. The transceiver unit is further configured to report the basic information of the first information based on the reporting precision of the basic information. In addition, the transceiver unit is further configured to report, within the reporting duration, the at least one piece of incremental information of the first information in sequence based on the reporting precision of the incremental information reported each time.

Optionally, the processing unit is further configured to: when the timer stops timing, perform at least one of the following: stopping reporting the basic information of the first information; stopping reporting the at least one piece of incremental information of the first information; discarding the basic information that is of the first information and that has been processed but has not been reported; or discarding the at least one piece of incremental information that is of the first information and that has been processed but has not been reported.

Optionally, the transceiver unit is further configured to receive configuration information, where the configuration information includes a second correspondence between one or more reporting modes and one or more mode application conditions. The processing unit is further configured to determine, based on the second correspondence and a first mode application condition, the reporting mode corresponding to the first mode application condition.

According to a fourth aspect, an information transmission apparatus is provided, and may implement the information transmission method in the second aspect. For example, the information transmission apparatus may be a chip or an access network device. The foregoing method may be implemented by software, hardware, or hardware executing corresponding software.

In a possible implementation, the information transmission apparatus includes a transceiver unit and a processing unit. The transceiver unit is configured to send reporting indication information, where the reporting indication information indicates reporting precision. The transceiver unit is further configured to: receive reported first information, where the first information is reported based on a reporting mode and/or the reporting indication information; and process the first information based on the reported first information.

Optionally, the reporting precision indicates quantization precision of the first information.

Optionally, the first information is quantized in at least one of the following manners: a quantity of digits after a decimal point of a value of the first information, and a quantity of bits used to represent the first information.

Optionally, the reporting indication information indicates a first correspondence between one or more pieces of reporting precision and one or more application conditions of the reporting precision.

Optionally, the application condition of the reporting precision includes at least one of the following: a channel status of a terminal, power information of the terminal, computing power of the terminal, and load information of the terminal.

Optionally, the reporting mode further includes a one-time reporting mode, and the one-time reporting mode indicates to report the first information once.

Optionally, the reporting indication information further indicates a quantization error threshold, and the transceiver unit is further configured to: when an error between a quantized value and an actual value of the first information is greater than or equal to the quantization error threshold, receive reported exception information. Alternatively, the reporting indication information further indicates a quantization error threshold and an exception proportion threshold, and the transceiver unit is further configured to: when a proportion of information quantized as abnormal in multiple pieces of to-be-reported first information exceeds the exception proportion threshold, receive reported exception information, where if an error between a quantized value and an actual value of any one of the multiple pieces of first information is greater than or equal to the quantization error threshold, quantization is abnormal, where the quantized value is a value obtained by processing the first information based on the reporting precision.

Optionally, the reporting mode is an incremental reporting mode, the first information includes basic information and at least one piece of incremental information, and the reporting indication information further indicates at least one of the following incremental reporting parameters: a quantity of training rounds of a model, reporting precision of the basic information, a quantity of reporting times of incremental reporting, reporting precision of incremental information reported each time, reporting duration, a quantization error threshold corresponding to the basic information, and a quantization error threshold corresponding to each of the at least one piece of incremental information.

Optionally, the incremental information reported each time is related to importance and/or a priority of the first information.

Optionally, the transceiver unit is further configured to receive the reported basic information of the first information based on the reporting precision of the basic information. The transceiver unit is further configured to receive, based on the reporting precision of the incremental information reported each time, the at least one piece of incremental information that is of the first information and that is reported in sequence, where a quantity of reporting times of the at least one piece of incremental information is less than or equal to the quantity of reporting times of the incremental reporting indicated by the reporting indication information. In addition, the processing unit is further configured to combine the received basic information of the first information and the received at least one piece of incremental information of the first information.

Optionally, the processing unit is further configured to process, based on reporting precision corresponding to multiple pieces of first information reported by multiple terminals and weights corresponding to the reporting precision, the multiple pieces of first information reported by the multiple terminals.

Optionally, the transceiver unit is further configured to send configuration information, where the configuration information includes a second correspondence between one or more reporting modes and one or more mode application conditions.

With reference to the third aspect or the fourth aspect, in another possible implementation, the information transmission apparatus in the third aspect or the fourth aspect includes a processor coupled to a memory. The processor is configured to support the apparatus in performing a corresponding function in the foregoing information transmission method. The memory is configured to be coupled to the processor, and stores a program (instructions) and/or data necessary for the apparatus. Optionally, the information transmission apparatus may further include a communication interface, configured to support communication between the apparatus and another network element. Optionally, the memory may be located inside the information transmission apparatus, or may be located outside the information transmission apparatus.

With reference to the third aspect or the fourth aspect, in another possible implementation, the information transmission apparatus in the third aspect or the fourth aspect includes a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to implement the foregoing method by using a logic circuit or by executing code instructions. The transceiver apparatus may be a transceiver, a transceiver circuit, or an input/output interface, and is configured to: receive a signal from an apparatus other than the information transmission apparatus and transmit the signal to the processor, or send a signal from the processor to an apparatus other than the information transmission apparatus. When the information transmission apparatus is a chip, the transceiver apparatus is a transceiver circuit or an input/output interface.

When the information transmission apparatus in the third aspect or the fourth aspect is a chip or a chip module, a sending unit may be an output unit, for example, an output circuit or a communication interface; and a receiving unit may be an input unit, for example, an input circuit or a communication interface. When the information transmission apparatus is a terminal or an access network device, a sending unit may be a transmitter or a transmitter machine; and a receiving unit may be a receiver or a receiver machine.

According to a fifth aspect, a computer-readable storage medium is provided. The computer-readable storage medium stores a computer program or instructions. When a computer executes the computer program or the instructions, the methods in the foregoing aspects are implemented.

According to a sixth aspect, a computer program product including instructions is provided. When the instructions are run on an information transmission apparatus, the information transmission apparatus is enabled to perform the methods in the foregoing aspects.

According to a seventh aspect, a communication system is provided. The communication system includes the information transmission apparatus in the third aspect and the information transmission apparatus in the fourth aspect.

### BRIEF DESCRIPTION OF DRAWINGS

FIG. 1 is a diagram of an architecture of cloud AI multipoint coordination;
FIG. 2 is a diagram of an architecture of multipoint coordination after downward AI migration;
FIG. 3 is a schematic flowchart of performing federated learning by an access network device and multiple terminals;
FIG. 4 is a diagram of a communication system according to an embodiment of this application;
FIG. 5 is a diagram of another communication system according to an embodiment of this application;
FIG. 6 is a diagram of still another communication system according to an embodiment of this application;
FIG. 7 is a schematic flowchart of an information transmission method according to an embodiment of this application;
FIG. 8 is a diagram of effect comparison between an embodiment of this application and the conventional technology;
FIG. 9 is a diagram of a structure of an information transmission apparatus according to an embodiment of this application;
FIG. 10 is a diagram of a structure of a simplified terminal according to an embodiment of this application; and
FIG. 11 is a diagram of a structure of a simplified access network device according to an embodiment of this application.

### DESCRIPTION OF EMBODIMENTS

This application is applicable to a 5G communication system, a 6G communication system, a future evolved communication system, another communication system, or the like. This is not limited in this application.

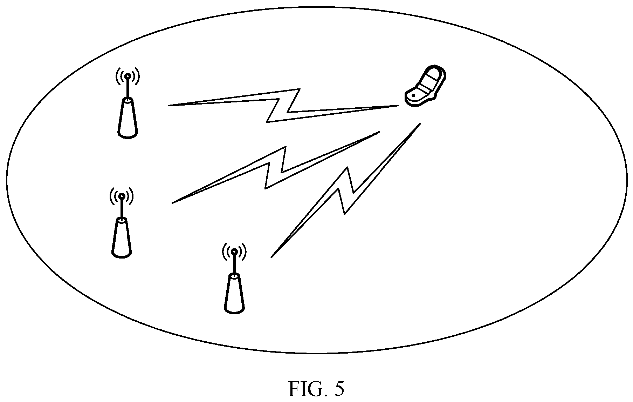

FIG. 4 is a diagram of a communication system according to this application. The communication system may include one or more access network devices (where only one access network device is shown in the figure) and one or more terminals connected to the access network device, and may further include a core network device (not shown in the figure). One access network device may transmit data or control signaling to one or more terminals. In another communication system shown in FIG. 5, multiple access network devices may simultaneously transmit data or control signaling to one terminal.

The core network device mainly has functions of user connection provision, user management, and service bearing, and functions as a bearer network to provide an interface to an external network. The user connection establishment includes mobility management (mobility management, MM), calling management (calling management, CM), switching/routing, recording notification (completing a connection to a peripheral device of an intelligent network with reference to an intelligent network service), and other functions. The user management includes user description, quality of service (quality of service, QoS), user communication records (accounting), a virtual home environment (virtual home environment, VHE) (providing a virtual home environment by carrying out dialogues with an intelligent network platform), and security (where an authentication center provides corresponding security measures, including security management for a mobile service and security processing for external network access). The bearer connection includes connection to an external public switched telephone network (public switched telephone network, PSTN), an external circuit data network, a packet data network, an internet (internet), an intranet (intranet), a short message service (short message service, SMS) server of the mobile network, and the like. The core network device can provide basic services including mobile office, e-commerce, communication, entertainment services, travel services, location-based services, remote sensing services (telemetry), simple message transfer services (monitoring control), and the like.

The access network device may be any device having a wireless transceiver function, including but not limited to a NodeB (NodeB), an evolved NodeB (eNodeB), a base station in a 5^{th} generation (5^{th} generation, 5G) communication system, a base station or an access network device in a future communication system, an access node in a Wi-Fi system, a wireless relay node, a wireless backhaul node, and the like. The access network device may alternatively be a radio controller in a cloud radio access network (cloud radio access network, CRAN) scenario. The access network device may alternatively be a small cell, a transmission node (transmission reference point, TRP), or the like. A specific technology and a specific device form that are used by the access network device are not limited in embodiments of this application.

The terminal is a device having a wireless transceiver function, and may be deployed on the land (including an indoor device or an outdoor device), or may be hand-held, wearable, or vehicle-mounted; may be deployed on the water surface, for example, on a ship; or may be deployed in the air, for example, on an airplane, a balloon, and a satellite. The terminal may be a mobile phone (mobile phone), a tablet computer (pad), a computer having a wireless transceiver function, a wearable device, an uncrewed aerial vehicle, a helicopter, an airplane, a ship, a robot, a mechanical arm, a smart home device, a virtual reality (virtual reality, VR) terminal, an augmented reality (augmented reality, AR) terminal, a wireless terminal in industrial control (industrial control), a wireless terminal in self-driving (self-driving), an automobile, a functional module in a vehicle, a wireless terminal in remote medical (remote medical), a wireless terminal in a smart grid (smart grid), a wireless terminal in transportation safety (transportation safety), a wireless terminal (such as a street lamp) in a smart city (smart city), a wireless terminal in a smart home (smart home), or the like. An application scenario is not limited in embodiments of this application. The terminal sometimes may also be referred to as user equipment (user equipment, UE), an access terminal, a UE unit, a mobile station, a remote station, a remote terminal, a mobile device, a terminal (terminal), a wireless communication device, a UE agent, a UE apparatus, or the like. A specific technology and a specific device form that are used by the terminal are not limited in embodiments of this application.

Optionally, in embodiments of this application, the terminal or the access network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). An operating system may be any one or more computer operating systems that implement service processing by using a process (process), for example, a Linux operating system, a Unix (Unix) operating system, an Android (Android) operating system, an iOS operating system, or a Windows operating system. The application layer includes applications such as a browser, an address book, word processing software, and instant messaging software. In addition, a specific structure of an execution body of a method provided in embodiments of this application is not specifically limited in embodiments of this application, provided that a program that records code of the method provided in embodiments of this application can be run to perform communication according to the method provided in embodiments of this application. For example, the method provided in embodiments of this application may be performed by the terminal or the access network device, or a functional module that can invoke and execute the program and that is in the terminal or the access network device.

In other words, related functions of the terminal or the access network device in embodiments of this application may be implemented by one device, may be implemented by multiple devices together, or may be implemented by one or more functional modules in one device. This is not specifically limited in embodiments of this application. It may be understood that the foregoing function may be a network element in a hardware device, a software function running on dedicated hardware, a combination of hardware and software, or a virtualized function instantiated on a platform (for example, a cloud platform).

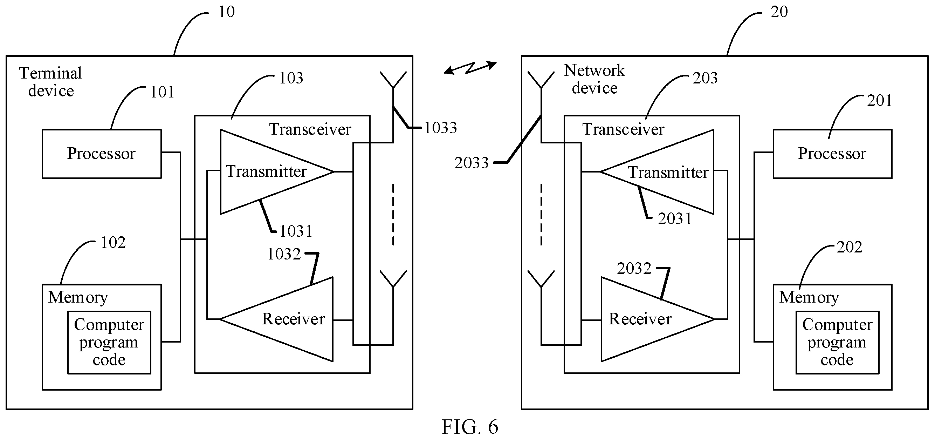

Communication between the access network device and the terminal in each communication system shown in FIG. 4 and FIG. 5 may alternatively be represented in another form. As shown in FIG. 6, a terminal 10 includes a processor 101, a memory 102, and a transceiver 103, and the transceiver 103 includes a transmitter 1031, a receiver 1032, and an antenna 1033. An access network device 20 includes a processor 201, a memory 202, and a transceiver 203, and the transceiver 203 includes a transmitter 2031, a receiver 2032, and an antenna 2033. The receiver 1032 may be configured to receive transmission control information by using the antenna 1033, and the transmitter 1031 may be configured to send transmission feedback information to the access network device 20 by using the antenna 1033. The transmitter 2031 may be configured to send the transmission control information to the terminal 10 by using the antenna 2033, and the receiver 2032 may be configured to receive, by using the antenna 2033, the transmission feedback information sent by the terminal 10.

The processor 101/processor 201 may be a CPU, a microprocessor, an application-specific integrated circuit (application-specific integrated circuit, ASIC), or one or more integrated circuits configured to control program execution in the solution of this application.

The memory 102/memory 202 may be an apparatus having a storage function, for example, may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer. However, this is not limited thereto. The memory may exist independently and may be connected to the processor through a communication line. The memory may alternatively be integrated with the processor.

The memory 102/memory 202 is configured to store computer-executable instructions for executing the solutions of this application, and the processor 101/processor 201 controls the execution. The processor 101/processor 201 is configured to execute the computer-executable instructions stored in the memory 102/memory 202, to implement the information transmission method provided in embodiments of this application.

Alternatively, in this embodiment of this application, the processor 101/processor 201 may perform a processing-related function in the information transmission method provided in the following embodiments of this application.

The computer-executable instructions in embodiments of this application may also be referred to as application program code. This is not specifically limited in embodiments of this application.

It should be noted that the terms "system" and "network" in embodiments of this application may be used interchangeably.

For a problem of how to flexibly perform information transmission or reporting in a wireless network, this application provides an information transmission solution. A terminal obtains reporting indication information, where the reporting indication information indicates reporting precision; and the terminal reports first information based on a reporting mode and/or the reporting indication information, so that the terminal can report information in a timely manner. This reduces waiting time on a network side, and reduces discarding of reporting of the terminal. This solution may be applied to an AI scenario or another scenario in which the reporting precision needs to be indicated. This is not limited in this application.

Information transmission in this application may be information transmission between any devices. For example, a device sending information may be an access network device, a terminal, a core network device, or a network management device, and a device receiving information may also be an access network device, a terminal, a core network device, a network management device, or the like. For example, the terminal may generate the first information, and report the first information to the access network device. For another example, the terminal may generate the first information, and report the first information to the core network device via a non-access stratum (non-access stratum, NAS) message. For another example, the access network device or the core network device may generate the first information, and report the first information to the network management device through a northbound/southbound interface. In the following embodiments, information transmission between the access network device and the terminal is used as an example for description.

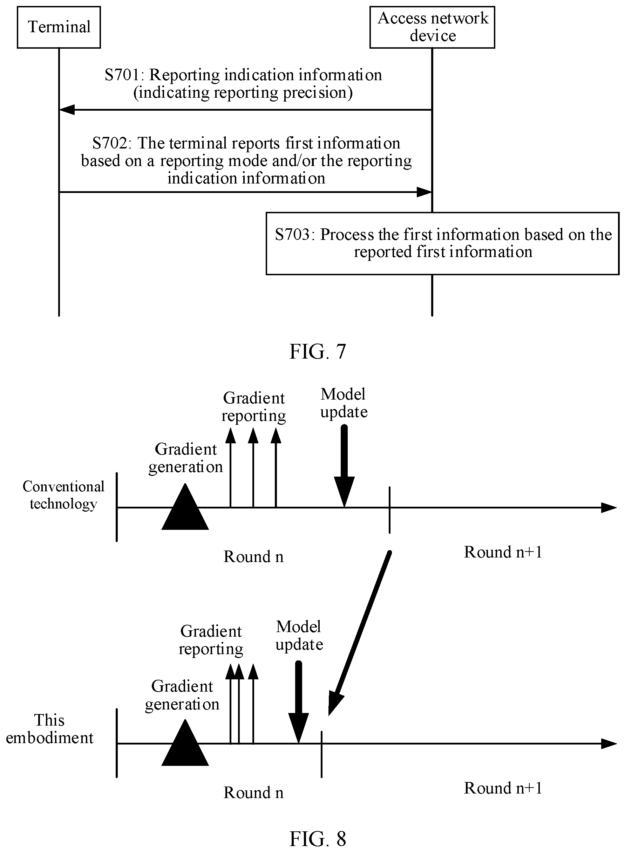

FIG. 7 is a schematic flowchart of an information transmission method according to an embodiment of this application. For example, the method may include the following steps.

S701: An access network device sends reporting indication information.

The reporting indication information indicates reporting precision. To be specific, the access network device indicates a terminal to specifically report first information with precision of which type of information.

Before reporting the first information, the terminal needs to quantize the first information. Specifically, the reporting precision indicates quantization precision of the first information. The terminal quantizes the first information based on the quantization precision. The first information is information obtained by performing quantization based on the reporting precision. The quantization includes encoding and other operations.

For example, the first information may be quantized based on a quantity of digits after a decimal point of a value of the first information. For example, an actual value of the first information is 0.8523. Assuming that the quantization precision of the first information is three digits after the decimal point, quantized first information is 0.852.

The first information may alternatively be quantized based on a quantity of bits of the first information. For example, the quantization precision is two bits. It is assumed that a range of the first information is 0 to 1, where "00" represents 0 to 0.25, "01" represents 0.25 to 0.5, "10" represents 0.5 to 0.75, and "11" represents 0.75 to 1. Assuming that an actual value of the first information is 0.56, a quantized value of the first information is "10".

The reporting precision determines a value of the first information, and therefore determines whether the terminal can report the first information in a timely and reliable manner. For example, if a channel status of the terminal is poor, power of the terminal is low, computing power of the terminal is poor, or load of the terminal is heavy, but the access network device still indicates the terminal to report the first information with high reporting precision. As a result, the terminal may not be able to report the first information in a timely and reliable manner. Consequently, reporting of the terminal is discarded. Therefore, that the access network device properly indicates the reporting precision of the terminal is very important for whether the first information can be reported in a timely and reliable manner.

In an implementation, the access network device may determine reporting precision of each terminal based on an algorithm of the access network device and the like.

In another implementation, the access network device may alternatively determine the reporting precision of the terminal based on the channel status that is of the terminal and that is obtained by the access network device through measurement.

In still another implementation, the access network device may alternatively determine the reporting precision of the terminal based on one or more of information such as a channel status reported by the terminal in real time, power information of the terminal, computing power of the terminal, and load information of the terminal.

Channel quality of the terminal affects information communication. Therefore, the access network device may determine the reporting precision of the terminal based on the channel status reported by the terminal in real time. If the channel status of the terminal is good, precision of information reported by the terminal may be higher; or if the channel status of the terminal is poor, precision of information reported by the terminal may be lower. For example, if the channel status of the terminal is less than or equal to -110 dB, the access network device determines that the reporting precision of the terminal is two bits; if the channel status of the terminal is between -110 dB and -100 dB, the access network device determines that the reporting precision of the terminal is three bits; or if the channel status of the terminal is greater than or equal to -100 dB, the access network device determines that the reporting precision of the terminal is four bits.

In addition, whether the power of the terminal is sufficient also affects the precision of the reported information. Therefore, the access network device may determine the reporting precision of the terminal based on the power information of the terminal. If the power of the terminal is sufficient, the precision of the information reported by the terminal may be higher; or if the remaining power of the terminal is low, the precision of the information reported by the terminal may be lower. For example, if the power of the terminal is 90%, the access network device determines that the reporting precision of the terminal is four bits; if the power of the terminal is 60%, the access network device determines that the reporting precision of the terminal is three bits; if the power of the terminal is 30%, the access network device determines that the reporting precision of the terminal is two bits; and so on.

The computing power of the terminal also affects the precision of the reported information. If the computing power of the terminal is weak, and the access network device requires high reporting precision of the terminal, the access network device needs to wait for long time before the terminal reports the information; or if the computing power of the terminal is strong, and the access network device requires low reporting precision of the terminal, the precision of the information obtained by the access network device is low. Therefore, the access network device may determine the reporting precision of the terminal based on the computing power of the terminal. If the computing power of the terminal is strong, the precision of the information reported by the terminal may be higher; or if the computing power of the terminal is weak, the precision of the information reported by the terminal may be lower.

Heavy load of the terminal means that the terminal needs more computing power and more power to support load running of the terminal. Therefore, the load of the terminal also affects the precision of the reported information. The access network device may determine the reporting precision of the terminal based on the load information of the terminal. If the load of the terminal is heavy, the precision of the information reported by the terminal may be higher; or if the load of the terminal is light, the precision of the information reported by the terminal may be lower.

The access network device may determine the reporting precision of the terminal based on the channel status of the terminal, the power information of the terminal, the computing power of the terminal, or the load information of the terminal. The access network device may alternatively determine the reporting precision of the terminal based on at least two of the following: the channel status of the terminal, the power information of the terminal, the computing power of the terminal, and the load information of the terminal.

For one or more terminals served by the access network device, the access network device may indicate different reporting precision for each terminal or each group of terminals.

In another implementation, the reporting precision may alternatively be determined by the terminal. In this implementation, the reporting indication information may alternatively indicate a first correspondence between one or more pieces of reporting precision and one or more application conditions of the reporting precision. After receiving the reporting indication information, the terminal determines the reporting precision of the first information based on the first correspondence and an application condition of first reporting precision.

The application condition of the reporting precision includes at least one of the following: the channel status of the terminal, power information of the terminal, computing power of the terminal, and load information of the terminal. The application condition of the reporting precision is a specific condition under which corresponding reporting precision is used. For example, the access network device may include the reporting indication information in radio resource control (resource radio control, RRC) signaling. The access network device does not need to dynamically indicate the reporting precision in real time. This reduces signaling overheads.

For example, the application condition of the reporting precision is the channel status of the terminal, and the reporting precision is represented by a quantity of bits. The following Table 1 illustrates the first correspondence between the one or more pieces of reporting precision and the one or more application conditions of the reporting precision.

**Table 1**

| Channel status (RSRP, unit: dB) of the terminal | Reporting precision (unit: bit) |
|---|---|
| Less than or equal to -110 | Two bits |
| -110 to -100 | Three bits |
| Greater than or equal to -100 | Four bits |

The channel status of the terminal is reference signal received power (reference signal received power, RSRP) obtained by the terminal by measuring a reference signal received from the access network device. Certainly, the channel status of the terminal may alternatively be represented by reference signal received quality (reference signal received quality, RSRQ), a signal to interference plus noise ratio (signal to interference plus noise ratio), or the like. This is not limited in this embodiment.

Alternatively, the first correspondence may be agreed on in a protocol. Before delivery, the first correspondence may be written into the terminal. Therefore, signaling overheads for transmitting the reporting indication information can be reduced.

In addition, reporting modes in this embodiment include a one-time reporting mode, an incremental reporting mode, and the like. This application is not limited to the foregoing two reporting modes. The reporting indication information may further indicate a second correspondence between one or more reporting modes and one or more mode application conditions.

The mode application condition includes a rate change speed, the RSRP, a CQI, the RSRQ, a modulation and coding scheme (modulation and coding scheme, MCS), and the like of the terminal.

For example, the mode application condition is the RSRP. The reporting indication information indicates the first correspondence and the second correspondence. The reporting indication information may be shown in Table 2 below.

**Table 2**

| Reporting mode | Channel status (for example, RSRP, unit: dB) of the terminal | Reporting precision (unit: bit) |
|---|---|---|
| One-time reporting mode | -150 to -110 | Two bits |
| | -110 to -100 | Three bits |
| | -100 to -90 | Four bits |
| Incremental reporting mode | -90 to -80 | Basic information: Two bits |
| | | 1^{st} time of incremental reporting: One bit |
| | | 2^{nd} time of incremental reporting: One bit |
| | Greater than -80 | Basic information: Three bits |
| | | 1^{st} time of incremental reporting: One bit |
| | | 2^{nd} time of incremental reporting: One bit |

In Table 2, the second correspondence between the reporting modes and the mode application conditions is as follows. If the channel status of the terminal is between -150 dB and -90 dB, the one-time reporting mode is used; or if the channel status of the terminal is greater than -80 dB, the incremental reporting mode is used.

The first correspondence between the reporting precision and the application conditions of the reporting precision is as follows. If the channel status of the terminal is between -150 dB and -110 dB, the reporting precision is two bits; if the channel status of the terminal is between -110 dB and -100 dB, the reporting precision is three bits; if the channel status of the terminal is between -100 dB and -90 dB, the reporting precision is four bits; if the channel status of the terminal is from -90 dB to -80 dB, reporting precision of the basic information of the first information is two bits, reporting precision of the 1^{st} time of incremental reporting is one bit, and reporting precision of the 2^{nd} time of incremental reporting is one bit; or if the channel status of the terminal is greater than -80 dB, reporting precision of the basic information of the first information is three bits, reporting precision of the 1^{st} time of incremental reporting is one bit, and reporting precision of the 2^{nd} time of incremental reporting is one bit.

It may be understood that the first correspondence and the second correspondence that are indicated by the reporting indication information may be considered as a group of correspondences, that is, a correspondence between the reporting modes, the application conditions, and the reporting precision. An example is shown in Table 2.

After receiving the reporting indication information, the terminal may cache the first correspondence.

When the terminal needs to report the first information, the terminal determines the reporting precision of the first information based on the first correspondence and the application condition of the first reporting precision. The application condition of the first reporting precision is a current application condition of the reporting precision of the terminal, for example, a current channel status of the terminal, current power information of the terminal, current computing power of the terminal, or current load information of the terminal.

Still refer to Table 1. Assuming that the current channel status of the terminal is -105 dB, the terminal may determine that the reporting precision of the first information is three bits.

If the reporting indication information further indicates the first correspondence and the second correspondence, the terminal may determine, based on the second correspondence and a first mode application condition, the reporting mode corresponding to the first mode application condition, where the first mode application condition is a current mode application condition of the terminal. Further, the terminal may determine the reporting precision corresponding to the application condition of the first reporting precision based on the first correspondence and the application condition of the first reporting precision.

For example, assuming that the RSRP of the terminal is -100, the terminal may determine, based on the second correspondence shown in Table 2, to use the one-time reporting mode. Further, the terminal may determine, based on the first correspondence shown in Table 2, that the reporting precision is three bits.

The access network device indicates the first correspondence between the one or more pieces of reporting precision and the one or more application conditions of the reporting precision, and the terminal determines the reporting precision of the first information based on the current application condition of the first reporting precision and the first correspondence. The access network device does not need to dynamically indicate the reporting precision in real time. This reduces signaling overheads.

Specifically, for information transmission in the incremental reporting mode, the reporting indication information indicates at least one of the following incremental reporting parameters: a quantity of training rounds of a model, a total quantity of reporting times of the first information, the reporting precision of the basic information, a quantity of reporting times of incremental reporting, reporting precision of incremental information reported each time, reporting duration, a quantization error threshold corresponding to the basic information, and a quantization error threshold corresponding to each of at least one piece of incremental information.

When the method is applied to model training, the quantity of training rounds of the model indicates a specific round of model training, and first information generated by the terminal in the round of model training is correspondingly reported. For example, if there are eight rounds of model training in total, two bits may indicate a current round of model training.

The total quantity of reporting times of the first information indicates a total quantity of rounds of reporting first information generated through model training. The total quantity of reporting times of the first information may be less than or equal to the quantity of training rounds of the model. For example, there are three rounds of local training, and the total quantity of reporting times of the first information is 1, that is, the first information is reported once.

The reporting precision of the basic information indicates that the terminal may quantize the basic information of the first information with the reporting precision before reporting the basic information of the first information, to obtain a quantized value of the basic information of the first information.

The quantity of reporting times of the incremental reporting indicates a quantity of times that incremental information of the first information is reported in the round of training.

The reporting precision of the incremental information reported each time indicates that for the incremental information reported each time, the terminal may quantize, with the reporting precision corresponding to this time of incremental reporting, the incremental information reported this time.

The reporting duration indicates a period of time in which the terminal reports the basic information and the at least one piece of incremental information of the first information.

The quantization error threshold corresponding to the basic information indicates a maximum value or a minimum value of an error between the quantized value and an actual value of the basic information of the first information.

The quantization error threshold corresponding to each of the at least one piece of incremental information indicates a maximum value or a minimum value of an error between a quantized value and an actual value of each piece of incremental information of the first information.

The access network device may send the reporting indication information in a broadcast, multicast, or unicast manner. For example, for each terminal served by the access network device, if different reporting precision is indicated to each terminal, the access network device may send the reporting indication information in a unicast manner; for each group of terminals served by the access network device, if different reporting precision is indicated to each group of terminals, the access network device may send the reporting indication information in a multicast manner; or for multiple terminals served by the access network device, if same reporting precision is indicated to the multiple terminals, the access network device may send the reporting indication information in a broadcast manner.

For example, the access network device may send the reporting indication information by using signaling such as RRC signaling, service data adaptation protocol (service data adaptation protocol, SDAP) signaling, packet data convergence protocol (packet data convergence protocol, PDCP) signaling, radio link control (radio link control, RLC) signaling, medium access control (medium access control, MAC) signaling, or downlink control information (downlink control information, DCI) signaling, or a combination of the foregoing signaling.

The reporting indication information is sent by using the combination of the foregoing signaling. For example, a list of reporting precision and an index of the reporting precision may be configured by using the RRC signaling, and then an index in the list is indicated by using a medium access control-control element (medium access control-control element, MAC CE).

The reporting indication information may be carried in an existing message or information element, or may be carried in a newly added message or information element.

When the reporting indication information includes multiple incremental reporting parameters, the multiple incremental reporting parameters may be carried in one message, or may be separately carried in multiple messages.

S702: After obtaining the reporting indication information, the terminal reports the first information based on the reporting mode and/or the reporting indication information.

After receiving the reporting indication information, the terminal reports the first information based on the reporting precision indicated by the reporting indication information. Because the terminal reports the first information based on the reporting precision indicated by the reporting indication information, the first information can be reported in a timely and reliable manner.

The terminal may further report the first information based on a specified or configured reporting mode.

The reporting modes include the one-time reporting mode and the incremental reporting mode. The one-time reporting mode indicates to report the first information once. The incremental reporting mode indicates to report the first information in multiple times. The basic information of the first information is first reported, and then the at least one piece of incremental information of the first information is reported in sequence.

For example, the incremental reporting mode is used in this embodiment. The incremental reporting mode is used, to at least ensure that the terminal reports the basic information, and may further report the at least one piece of incremental information, and reporting of the terminal is not discarded.

The reporting mode may be specified in a protocol, or may be preconfigured by the access network device.

Further, the reporting indication information indicates or carries a quantization error threshold. The quantization error threshold is a maximum value or a minimum value of an error between a quantized value and an actual value of the first information. The reporting precision indicated by the reporting indication information may be improper. The terminal quantizes the actual value of the first information based on the reporting precision. However, when the error between the quantized value and the actual value of the first information is greater than or equal to the quantization error threshold, the terminal reports exception information.

In this embodiment, an example in which the quantization error threshold is the maximum value of the error between the quantized value and the actual value of the first information is used. The terminal quantizes the first information to obtain the quantized value of the first information. If the error between the quantized value and the actual value of the first information is greater than or equal to the quantization error threshold, the terminal reports the exception information. Further, the terminal may continue to report the quantized value of the first information. After receiving the exception information and the quantized value of the first information, the access network device determines that quantization is abnormal, and may re-indicate reporting precision of information in the round, and additionally request the terminal to re-report the first information.

For example, the first reporting precision is two bits. It is assumed that a range of the first information is 0 to 1, where "00" represents 0 to 0.25, "01" represents 0.25 to 0.5, "10" represents 0.5 to 0.75, and "11" represents 0.75 to 1. It is assumed that the actual value of the first information is 0.56, and the quantized value of the first information is "10", corresponding to 0.625. Assuming that the quantization error threshold is 0.05, the error between the quantized value and the actual value of the first information is 0.625-0.56=0.065, which is greater than the quantization error threshold, and the terminal reports the exception information.

That the terminal reports the exception information indicates that the reporting precision indicated by the reporting indication information is improper.

The access network device receives the exception information reported by the terminal, and may learn that the reporting precision indicated by the reporting indication information is improper. In this case, the access network device re-delivers reporting indication information, where the re-delivered reporting indication information includes new reporting precision.

For example, the new reporting precision is three bits. It is assumed that a range of the first information is 0 to 1, where "000" represents 0 to 0.125, "001" represents 0.125 to 0.25, "010" represents 0.25 to 0.375, "011" represents 0.375 to 0.5, "100" represents 0.5 to 0.625, "101" represents 0.625 to 0.75, "110" represents 0.75 to 0.875, and "111" represents 0.875 to 1. Assuming that the actual value of the first information is 0.56, and the quantized value of the first information is "100", corresponding to 0.5625, the error between the quantized value and the actual value of the first information is 0.5625-0056=0.0025, which is less than the quantization error threshold, and the terminal reports the first information "100".

In another embodiment, the access network device may not need to re-deliver the reporting indication information after receiving the exception information reported by the terminal, but send new reporting indication information periodically or at any time, to send updated reporting precision.

Therefore, the terminal obtains the reporting indication information, where the reporting indication information indicates the reporting precision and the quantization error threshold. The terminal quantizes the actual value of the first information based on the reporting precision. However, when the error between the quantized value and the actual value of the first information is greater than or equal to the quantization error threshold, the terminal reports the exception information. The access network device receives the exception information reported by the terminal, and may learn that the reporting precision indicated by the reporting indication information is improper. In this case, the access network device re-sends reporting indication information, where the re-delivered reporting indication information indicates new reporting precision. In this way, the reporting precision is properly indicated, so that the terminal can report the first information in a timely and reliable manner.

A scenario corresponding to the foregoing embodiment is that the terminal needs to report one piece of first information in one round of reporting. In another embodiment, assuming that the terminal needs to report multiple pieces of first information in one round of reporting, the reporting indication information may indicate the reporting precision, a quantization error threshold, and an exception proportion threshold. When a proportion of information quantized as abnormal exceeds the exception proportion threshold, the terminal reports the exception information, where if an error between a quantized value and an actual value of any one of the multiple pieces of first information is greater than or equal to the quantization error threshold, quantization is abnormal.

For example, the reporting precision is two bits. The terminal needs to report 100 pieces of first information in one round of reporting. For quantization of each piece of first information, refer to descriptions in the foregoing embodiment. For each piece of first information, if an error between a quantized value and an actual value of the first information is greater than or equal to the quantization error threshold, quantization is abnormal. Assuming that the exception proportion threshold is 5%, and a quantity of pieces of information quantized as abnormal is 30, the proportion of the information quantized as abnormal is 30/100=30%, which exceeds the exception proportion threshold, and the terminal reports the exception information.

The access network device receives the exception information reported by the terminal, and may learn that the first reporting precision indicated by the reporting indication information is improper. In this case, the access network device re-sends reporting indication information. The re-delivered reporting indication information indicates new reporting precision.

The terminal performs quantization based on the new reporting precision until the proportion of the information quantized as abnormal is less than the exception proportion threshold.

Specifically, for information transmission in an incremental reporting mode, the terminal reports basic information of the first information based on reporting precision of the basic information.

Specifically, the terminal quantizes the basic information of the first information based on the reporting precision of the basic information, and reports a quantized value of the basic information of the first information. In addition, at least one of the following information may be further reported: a specific round of model training in which the first information is generated, a specific time of reporting the first information, the reporting precision of the basic information, and reporting duration.

In an example, the reporting precision is represented by a quantity of digits after a decimal point of a value of the first information. For example, the first information is 0.852, the reporting precision of the basic information is one digit after the decimal point, and reporting precision of incremental information reported each time is one digit after the decimal point. The terminal performs basic reporting and performs incremental reporting twice. The reported basic information and two pieces of incremental information are shown in Table 3 below.

**Table 3**

| | |
|---|---|
| First information | 0.852 |
| Basic information | 0.8 |
| Incremental information reported in a 1^{st} time | 0.5 |
| Incremental information reported in a 2^{nd} time | 0.2 |

In this example, the terminal reports the basic information 0.8.

In another example, the reporting precision is represented by a quantity of bits of the first information. For example, the first information is 0.852, which is converted into 11111010 in binary, the reporting precision of the basic information is two bits, and the reporting precision of the incremental information reported each time is six bits. The terminal performs basic reporting and performs incremental reporting once. The reported basic information and one piece of incremental information are shown in Table 4 below.

**Table 4**

| | |
|---|---|
| First information | 11111010 |
| Basic information | 11 |
| Incremental information reported in a 1^{st} time | 111010 |

In this example, the terminal reports the basic information 11.

Further, the terminal may start a timer. Duration of the timer is the reporting duration indicated by the reporting indication information.

The timer may be started in the following several implementations.

In an implementation, the terminal may obtain a system frame number (system frame number, SFN) from a master information block (master information block, MIB) broadcast by the access network device. Then, the terminal receives configuration information sent by the access network device. The configuration information is used to configure a subframe number (subframe number), to be specific, configure a specific subframe in which the terminal starts timing. The timing time is relative time.

In another implementation, the terminal may further start the timer when starting a current round of training or inference, or start the timer when starting a current round of reporting.

In another implementation, the terminal may determine start time of the timer based on a global positioning system (global positioning system, GPS) or the like of the terminal. The timing time is absolute time.

If all the basic information and the incremental information are successfully reported before the timer expires, the timer may be stopped.

If reporting of the basic information of the first information is not completed when the timer stops timing, the terminal may stop reporting the basic information. Further, the basic information that has been processed but has not been reported is discarded.

Properly controlling the reporting duration can improve reliability and timeliness of an entire information transmission process (for example, multi-round model training).

In addition, the terminal may alternatively not start a timer, but the access network device may configure absolute stop time for all terminals that need to report the first information, where the time may be an SFN or coordinated universal time (coordinated universal time, UTC)/Greenwich mean time (Greenwich mean time, G.M.T). For example, all terminals that need to report the first information may start to generate the first information at different time, but stop reporting the first information at unified stop time.

The terminal reports at least one piece of incremental information of the first information in sequence based on the reporting precision of the incremental information reported each time.

For each time of incremental reporting, the terminal quantizes, based on the reporting precision of the incremental information reported each time, incremental information reported this time. Then, all quantized incremental information is reported in sequence. In addition, the terminal may further report a specific round of model training in which the first information is generated, a specific time of reporting the first information, a specific time of incremental reporting of the first information, the reporting precision of the incremental information reported each time, and the reporting duration.

For example, in the 1^{st} example, after the terminal reports the basic information 0.8, the terminal reports the 1^{st} piece of incremental information 0.5 and the 2^{nd} piece of incremental information 0.2 in sequence.

For another example, in the 2^{nd} example, after the terminal reports the basic information "11", the terminal reports the incremental information "111010".

For example, a quantity of reporting times of the at least one piece of incremental information is less than or equal to the quantity of reporting times of the incremental reporting indicated by the reporting indication information. Information transmission is affected by the channel status of the terminal, the power of the terminal, the load of the terminal, and the like. The terminal may report the basic information and incremental information reported each time, may report only the basic information, or report the basic information and incremental information reported at least once. When the access network device receives the basic information reported by the terminal, at least reporting of the basic information of the first information is ensured. Alternatively, when the access network device receives the basic information and the incremental information reported at least once that are reported by the terminal, accurate first information may be obtained.

In addition, in a scenario in which multiple pieces of first information is reported in each round, information reported by the terminal each time is related to importance, a priority, and the like of the first information. The terminal needs to report multiple pieces of first information, and the multiple pieces of first information may have different importance, priorities, and the like. The terminal preferentially reports first information with high importance or a high priority. For example, if the terminal reports 100 pieces of first information, the terminal reports 50 pieces of information with highest importance or highest priorities as the basic information. Then, in a 1^{st} time of incremental reporting, the terminal reports 30 pieces of information with second highest importance or second highest priorities. In a 2^{nd} time of incremental reporting, the terminal reports 20 pieces of information with lower importance or lower priorities.

Model training shown in FIG. 3 is used as an example. The terminal reports gradient information that is generated in a current round of training and that is stored in a database B₁, where the gradient information includes a total of 3*4=12 pieces of gradient information generated between nodes at a first layer (input) and nodes at a second layer (middle layer), and a total of 4*3=12 pieces of gradient information generated between the nodes at the second layer (middle layer) and nodes at a third layer (output). The terminal may obtain importance or a priority of the gradient information in a manner such as a protocol agreement or an access network device configuration. Assuming that three pieces of gradient information generated between three nodes in the nodes at the third layer and a 1^{st} node in the nodes at the second layer have highest importance or highest priorities, the terminal first reports the three pieces of gradient information as the basic information. In addition, assuming that nine pieces of gradient information generated between the three nodes in the nodes at the third layer and remaining three nodes in the nodes at the second layer have second highest importance or second highest priorities, the terminal reports the nine pieces of gradient information in the 1^{st} time of incremental reporting. Assuming that 12 pieces of gradient information between the nodes at the second layer and the nodes at the first layer have lowest importance or lowest priorities, the terminal reports the 12 pieces of gradient information in the 2^{nd} time of incremental reporting. Specifically, the information reported each time is shown in Table 5 below.

**Table 5**

| | |
|---|---|
| First information | 24 pieces of gradient information |
| Basic information | Three pieces of gradient information with highest importance or highest priorities |
| Incremental information reported in a 1^{st} time | Nine pieces of gradient information with second highest importance or second highest priorities |
| Incremental information reported in a 2^{nd} time | 12 pieces of gradient information with lowest importance or lowest priorities |

In this way, after receiving the three pieces of gradient information with highest importance or highest priorities, the access network device may first perform model convergence, or update a gradient and a model in a unified manner after the foregoing timer expires. If the channel status is good, the access network device receives the incremental information reported in the 1^{st} time and/or the incremental information reported in the 2^{nd} time of the terminal, and may further perform good model convergence based on the incremental information reported in the 1^{st} time and/or the incremental information reported in the 2^{nd} time. If the channel status is poor, the access network device may alternatively perform good model convergence based on basic information with high importance or a high priority, and the incremental information reported in the 1^{st} time and/or the incremental information reported in the 2^{nd} time.

Assuming that the terminal starts the timer when starting to report the basic information, the terminal reports the at least one piece of incremental information of the first information in sequence within the reporting duration.

If the timer stops timing in a process of reporting the at least one piece of incremental information, the terminal stops reporting the at least one piece of incremental information of the first information. Further, the terminal discards the at least one piece of incremental information that is of the first information and that has been processed but has not been reported. For example, the terminal needs to report the basic information and two pieces of incremental information. If the terminal has reported the basic information and a 1^{st} piece of incremental information before the timer stops timing, the terminal stops reporting a 2^{nd} piece of incremental information, and discards the 2^{nd} piece of incremental information that has been processed but has not been reported.

Properly controlling the reporting duration can improve reliability and timeliness of an entire information transmission process (for example, multi-round model training).

For a specific reporting mode used by the terminal, refer to the following. Further, the method may include the following steps.

The access network device sends configuration information.

The configuration information includes a second correspondence between one or more reporting modes and one or more mode application conditions.

The reporting modes include the one-time reporting mode, the incremental reporting mode, and the like. This application is not limited to the foregoing two reporting modes. The mode application condition includes a rate change speed, the RSRP, a CQI, the RSRQ, a modulation and coding scheme (modulation and coding scheme, MCS), and the like of the terminal.

The one-time reporting mode is applicable to a scenario in which a rate of the terminal changes slowly, and the incremental reporting mode is applicable to a scenario in which a rate of the terminal changes quickly. In the one-time reporting mode, because the rate of the terminal changes slowly, the access network device may sense the channel status of the terminal, to determine whether to update the reporting precision of the terminal. In the incremental reporting mode, it can be ensured that at least a base value of the first information is reported regardless of how poor the channel status of the terminal is.

For example, the mode application condition is the rate change speed of the terminal, and the second correspondence may be shown in Table 6 below.

**Table 6**

| Reporting mode | Rate change threshold (unit: time/minute) of the terminal |
|---|---|
| One-time reporting mode | Threshold 1 |
| Incremental reporting mode | Threshold 2 |

In Table 6, the threshold 1 is less than the threshold 2.

For example, the access network device may include the configuration information in RRC signaling.

After receiving the configuration information, the terminal determines, based on the second correspondence and a first mode application condition, the reporting mode corresponding to the first mode application condition.

The first mode application condition is a current mode application condition of the terminal. For example, if the current mode application condition of the terminal is that the rate changes slowly and is less than or equal to the threshold 1, the terminal determines, based on the second correspondence, that the reporting mode is the one-time reporting mode. For example, if the current mode application condition of the terminal is that the rate changes quickly and is greater than or equal to the threshold 2, the terminal determines, based on the second correspondence, that the reporting mode is the incremental reporting mode.

In subsequent reporting, if the mode application condition of the terminal changes, the terminal re-determines a corresponding reporting mode.

Further, the terminal may send mode indication information to the access network device. The mode indication information indicates a reporting mode selected by the terminal.

The terminal reports the first information based on the reporting mode determined by the terminal based on the second correspondence and/or the reporting precision indicated by the reporting indication information.

S703: The access network device processes the first information based on the reported first information.

For example, in the foregoing example, an actual value of the first information is 0.8523. Assuming that quantization precision of the first information is three digits after the decimal point, quantized first information is 0.852. The access network device obtains the first information 0.852.

For another example, in the foregoing example, quantization precision is two bits. It is assumed that a range of the first information is 0 to 1, where "00" represents 0 to 0.25, "01" represents 0.25 to 0.5, "10" represents 0.5 to 0.75, and "11" represents 0.75 to 1. Assuming that an actual value of the first information is 0.56, and a quantized value of the first information is "10". After receiving "10", the access network device may obtain that the first information is a value from 0.5 to 0.75. For example, based on the received "10", the access network device may use an average value 0.625 of 0.5 to 0.75 by default as the first information.

The access network device may further receive one or more pieces of first information reported by one or more terminals, and process the one or more pieces of first information. In addition, each terminal has corresponding reporting precision, and different reporting precision has different weights. After receiving the multiple pieces of first information reported by the multiple terminals, the access network device may combine the multiple pieces of first information based on reporting precision respectively corresponding to the multiple pieces of first information and a weight corresponding to each piece of reporting precision. For example, a combination result is a sum of products of all pieces of first information and the weights. For example, the weight may be configured by an operation, administration, and maintenance (operation, administration, and maintenance) device for the access network device.

For example, the method may be applied to an AI model training scenario, and the first information may be the gradient mentioned in FIG. 3. After receiving one or more gradients reported by the one or more terminals, the access network device may update an AI model based on the one or more gradients, to obtain a new AI model through learning.

Further, the access network device may deliver the updated AI model to each terminal, so that each terminal performs next-step training and gradient calculation based on the updated AI model.

Further, the access network device processes the received first information based on the reporting mode indicated by the mode indication information. For example, if the mode indication information indicates that the reporting mode is one-time reporting, the access network device may directly use the received first information. If the mode indication information indicates that the reporting mode is incremental reporting, the access network device waits to receive the basic information and incremental information reported N times that are reported by the terminal, and combines, before using combined information, the basic information and the incremental information reported N times.

Specifically, for information transmission in the incremental reporting mode, the access network device combines the received basic information of the first information and the received at least one piece of incremental information of the first information.

Specifically, if the access network device receives the basic information reported by the terminal, the basic information is used as the information reported by the terminal.

If the access network device receives the basic information and incremental information reported at least once that are reported by the terminal, the basic information of the first information and the at least one piece of incremental information of the first information are combined. For example, after the terminal reports the basic information 0.8, the terminal reports the 1^{st} piece of incremental information 0.5 and the 2^{nd} piece of incremental information 0.2 in sequence. The access network device receives information reported by the terminal in three times, and may consider by default that information (the 1^{st} piece of incremental information) reported in the 2^{nd} time corresponds to a 2^{nd} digit after the decimal point, and information (the 2^{nd} piece of incremental information) reported in the 3^{rd} time corresponds to a 3^{rd} digit after the decimal point, to restore the first information 0.852.

For example, assuming that the access network device receives, within specific duration, no information (the 1^{st} piece of incremental information) reported in the 2^{nd} time, the access network device may retain only the basic information of the first information, and discard the information (the 2^{nd} piece of incremental information) reported in the 3^{rd} time, to obtain the first information 0.8.

The terminal uses the incremental reporting mode. In a scenario in which the channel status is poor, it can at least be ensured that the terminal reports the basic information of the first information. This improves reliability and timeliness of information transmission. In a scenario in which the channel status is good, the terminal may report the basic information and the at least one piece of incremental information of the first information. This improves accuracy of information transmission.

In this embodiment, the terminal reports the first information based on the reporting mode and/or the reporting precision indicated by the reporting indication information, so that each terminal can report the first information in a timely manner, and the access network device does not need to wait. In this way, a next learning periodicity is not delayed. In addition, first information of the terminal that is slowly reported is not discarded, so that a case in which the first information used by the access network device for learning is incomplete and a convergence speed of a model is reduced is not caused.

FIG. 8 is a diagram of effect comparison between an embodiment of this application and the conventional technology. In the conventional technology, for any round of model training, for example, an n^{th} round of model training, an access network device needs to wait for a gradient reported by each terminal, and then updates a model. Time for all terminals to report gradients is scattered. As a result, the access network device waits for long time.

According to an information transmission method provided in an embodiment of this application, a terminal selects, based on a correspondence between a reporting mode and a mode application condition, a reporting mode corresponding to a current mode application condition of the terminal. This improves reliability of information transmission.

In this embodiment, each terminal reports a gradient in a timely manner based on a reporting mode of each terminal and/or a reporting gradient of reporting precision indicated by reporting indication information received by each terminal. Time for all terminals to report gradients is centralized. This reduces waiting time of an access network device. Therefore, time of this round of training is shortened.

According to the information transmission method provided in this embodiment of this application, the terminal obtains the reporting indication information, where the reporting indication information indicates the reporting precision; and the terminal reports first information based on the reporting mode and/or the reporting indication information, so that the terminal can report information in a timely manner. This reduces waiting time on a network side, and reduces discarding of reporting of the terminal.

It may be understood that, in the foregoing embodiments, the method and/or steps implemented by the terminal may alternatively be implemented by a component (for example, a chip or a circuit) that can be used in the terminal, and the method and/or steps implemented by the access network device may alternatively be implemented by a component (for example, a chip or a circuit) that can be used in the access network device.

The foregoing mainly describes the solutions provided in embodiments of this application from a perspective of interaction between network elements. Correspondingly, an embodiment of this application further provides an information transmission apparatus. The information transmission apparatus is configured to implement the foregoing methods. The information transmission apparatus may be the terminal in the foregoing method embodiments, or may be a component that can be used in the terminal. Alternatively, the information transmission apparatus may be the access network device terminal in the foregoing method embodiments, or may be a component that can be used in the access network device terminal. It can be understood that, to implement the foregoing functions, the information transmission apparatus includes a corresponding hardware structure and/or software module for performing the functions. A person skilled in the art should easily be aware that, with reference to units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the information transmission apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, and is merely a logical function division. During actual implementation, another division manner may be used.

Based on a same concept of the foregoing information transmission method, this application further provides the following information transmission apparatus.

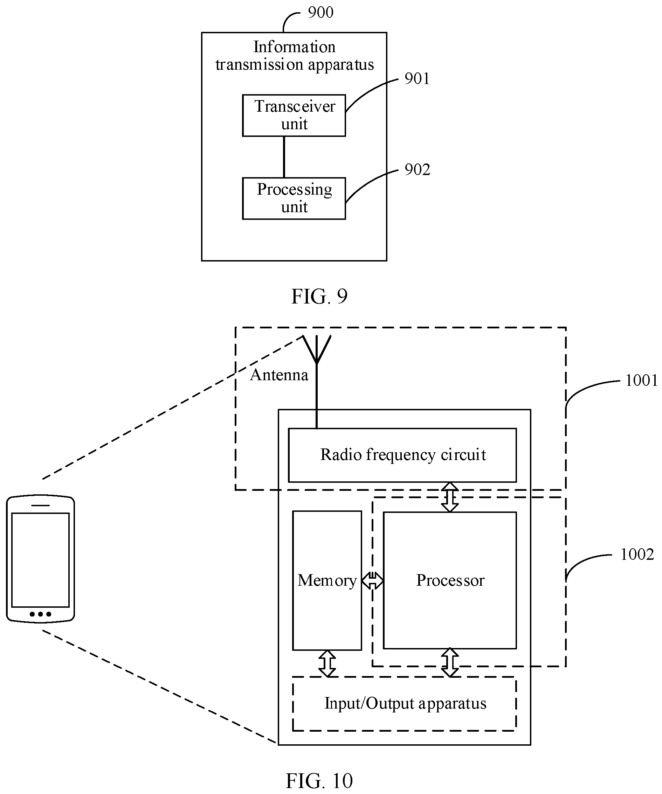

FIG. 9 is a diagram of a structure of an information transmission apparatus according to an embodiment of this application. The information transmission apparatus 900 includes a transceiver unit 901 and a processing unit 902.

When the information transmission apparatus 900 is configured to implement a function of the terminal in the foregoing embodiments, the transceiver unit 901 is configured to obtain reporting indication information, where the reporting indication information indicates reporting precision. The transceiver unit 901 is configured to report first information based on a reporting mode and/or the reporting indication information, where the reporting mode includes an incremental reporting mode.

Optionally, the reporting precision indicates quantization precision of the first information.

Optionally, the first information is quantized in at least one of the following manners: a quantity of digits after a decimal point of a value of the first information, and a quantity of bits used to represent the first information.

Optionally, the reporting indication information indicates a first correspondence between one or more pieces of reporting precision and one or more application conditions of the reporting precision. The processing unit 902 is configured to determine the reporting precision of the first information based on the first correspondence and an application condition of first reporting precision.

Optionally, the application condition of the reporting precision includes at least one of the following: a channel status of a terminal, power information of the terminal, computing power of the terminal, and load information of the terminal.

Optionally, the reporting mode further includes a one-time reporting mode, and the one-time reporting mode indicates to report the first information once.

Optionally, the reporting indication information further indicates a quantization error threshold, and the transceiver unit 901 is further configured to: when an error between a quantized value and an actual value of the first information is greater than or equal to the quantization error threshold, report exception information. Alternatively, the reporting indication information further indicates a quantization error threshold and an exception proportion threshold, and the transceiver unit 901 is further configured to: when a proportion of information quantized as abnormal in multiple pieces of to-be-reported first information exceeds the exception proportion threshold, report the exception information, where if an error between a quantized value and an actual value of any one of the multiple pieces of first information is greater than or equal to the quantization error threshold, quantization is abnormal, where the quantized value is a value obtained by processing the first information based on the reporting precision.

Optionally, the reporting mode is the incremental reporting mode, the first information includes basic information and at least one piece of incremental information, and the reporting indication information further indicates at least one of the following incremental reporting parameters: a quantity of training rounds of a model, reporting precision of the basic information, a quantity of reporting times of incremental reporting, reporting precision of incremental information reported each time, reporting duration, a quantization error threshold corresponding to the basic information, and a quantization error threshold corresponding to each of the at least one piece of incremental information.

Optionally, the incremental information reported each time is related to importance and/or a priority of the first information.

Optionally, the transceiver unit 901 is further configured to report the basic information of the first information based on the reporting precision of the basic information. The transceiver unit 901 is further configured to report the at least one piece of incremental information of the first information in sequence based on the reporting precision of the incremental information reported each time, where a quantity of reporting times of the at least one piece of incremental information is less than or equal to the quantity of reporting times of the incremental reporting indicated by the reporting indication information.

Optionally, the processing unit 902 is further configured to start a timer, where duration of the timer is the reporting duration. The transceiver unit 901 is further configured to report the basic information of the first information based on the reporting precision of the basic information. The transceiver unit 901 is further configured to report, within the reporting duration, the at least one piece of incremental information of the first information in sequence based on the reporting precision of the incremental information reported each time.

Optionally, when the timer stops timing, the processing unit 902 is further configured to perform at least one of the following: stopping reporting the basic information of the first information; stopping reporting the at least one piece of incremental information of the first information; discarding the basic information that is of the first information and that has been processed but has not been reported; or discarding the at least one piece of incremental information that is of the first information and that has been processed but has not been reported.

Optionally, the transceiver unit 901 is further configured to receive configuration information, where the configuration information includes a second correspondence between one or more reporting modes and one or more mode application conditions. The processing unit 902 is further configured to determine, based on the second correspondence and a first mode application condition, the reporting mode corresponding to the first mode application condition.

When the information transmission apparatus 900 is configured to implement a function of the access network device in the foregoing embodiments, the transceiver unit 901 is configured to send reporting indication information, where the reporting indication information indicates reporting precision. The transceiver unit 901 is further configured to: receive reported first information, where the first information is reported based on a reporting mode and/or the reporting indication information; and process the first information based on the reported first information.

Optionally, the reporting precision indicates quantization precision of the first information.

Optionally, the first information is quantized in at least one of the following manners: a quantity of digits after a decimal point of a value of the first information, and a quantity of bits used to represent the first information.

Optionally, the reporting indication information indicates a first correspondence between one or more pieces of reporting precision and one or more application conditions of the reporting precision.

Optionally, the application condition of the reporting precision includes at least one of the following: a channel status of a terminal, power information of the terminal, computing power of the terminal, and load information of the terminal.

Optionally, the reporting mode further includes a one-time reporting mode, and the one-time reporting mode indicates to report the first information once.

Optionally, the reporting indication information further indicates a quantization error threshold, and the transceiver unit 901 is further configured to: when an error between a quantized value and an actual value of the first information is greater than or equal to the quantization error threshold, receive reported exception information. Alternatively, the reporting indication information further indicates a quantization error threshold and an exception proportion threshold, and the transceiver unit 901 is further configured to: when a proportion of information quantized as abnormal in multiple pieces of to-be-reported first information exceeds the exception proportion threshold, receive reported exception information, where if an error between a quantized value and an actual value of any one of the multiple pieces of first information is greater than or equal to the quantization error threshold, quantization is abnormal, where the quantized value is a value obtained by processing the first information based on the reporting precision.

Optionally, the reporting mode is an incremental reporting mode, the first information includes basic information and at least one piece of incremental information, and the reporting indication information further indicates at least one of the following incremental reporting parameters: a quantity of training rounds of a model, reporting precision of the basic information, a quantity of reporting times of incremental reporting, reporting precision of incremental information reported each time, reporting duration, a quantization error threshold corresponding to the basic information, and a quantization error threshold corresponding to each of the at least one piece of incremental information.

Optionally, the incremental information reported each time is related to importance and/or a priority of the first information.

Optionally, the transceiver unit 901 is further configured to receive the reported basic information of the first information based on the reporting precision of the basic information. The transceiver unit 901 is further configured to receive, based on the reporting precision of the incremental information reported each time, the at least one piece of incremental information that is of the first information and that is reported in sequence, where a quantity of reporting times of the at least one piece of incremental information is less than or equal to the quantity of reporting times of the incremental reporting indicated by the reporting indication information. The processing unit 902 is further configured to combine the received basic information of the first information and the received at least one piece of incremental information of the first information.

Optionally, the processing unit 902 is further configured to process, based on reporting precision corresponding to multiple pieces of first information reported by multiple terminals and weights corresponding to the reporting precision, the multiple pieces of first information reported by the multiple terminals.

Optionally, the transceiver unit 901 is further configured to send configuration information, where the configuration information includes a second correspondence between one or more reporting modes and one or more mode application conditions.

According to an information transmission apparatus provided in an embodiment of this application, information transmission is performed by using the apparatus. This can reduce waiting time on a network side, and reduce discarding of reporting of a terminal.

FIG. 10 is a diagram of a structure of a simplified terminal. For ease of understanding and convenience of figure illustration, an example in which the terminal is a mobile phone is used in FIG. 10. As shown in FIG. 10, the terminal includes a processor, a memory, a radio frequency circuit, an antenna, and an input/output apparatus. The processor is mainly configured to: process a communication protocol and communication data, control the terminal, execute a software program, process data of the software program, and the like. The memory is mainly configured to store the software program and the data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to: receive data input by a user, and output data to the user. It should be noted that some types of terminals may have no input/output apparatus.

When data needs to be sent, after performing baseband processing on the to-be-sent data, the processor outputs a baseband signal to the radio frequency circuit. The radio frequency circuit performs radio frequency processing on the baseband signal and then sends the radio frequency signal to the outside in a form of an electromagnetic wave by using the antenna. When data is sent to the terminal, the radio frequency circuit receives a radio frequency signal by using the antenna, converts the radio frequency signal into a baseband signal, and outputs the baseband signal to the processor. The processor converts the baseband signal into data, and processes the data. For ease of description, FIG. 10 shows only one memory and one processor. In an actual terminal product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have receiving and sending functions may be considered as a receiving unit and a sending unit of the terminal (or may be collectively referred to as a transceiver unit), and the processor having a processing function may be considered as a processing unit of the terminal. As shown in FIG. 10, the terminal includes a transceiver unit 1001 and a processing unit 1002. The transceiver unit 1001 may also be referred to as a receiver/transmitter (sender), a receiver/transmitter machine, a receiver/transmitter circuit, or the like. The processing unit 1002 may also be referred to as a processor, a processing board, a processing module, a processing apparatus, or the like. The transceiver unit 1001 is configured to implement a function of the transceiver unit 901 in the embodiment shown in FIG. 9, and the processing unit 1002 is configured to implement a function of the processing unit 902 in the embodiment shown in FIG. 9.

For example, in an embodiment, the transceiver unit 1001 is configured to perform functions performed by the terminal in step S701 and step S702 in the embodiment shown in FIG. 7.

According to an information transmission apparatus provided in an embodiment of this application, the apparatus obtains reporting indication information, where the reporting indication information indicates reporting precision, and reports first information based on a reporting mode and/or the reporting indication information, so that the apparatus can report information in a timely manner. This reduces waiting time on a network side, and reduces discarding of reporting of a terminal.

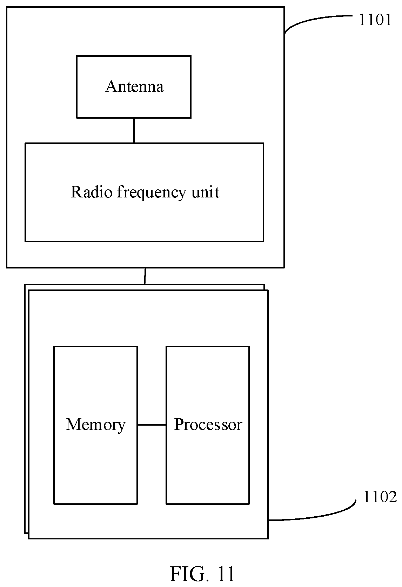

FIG. 11 is a diagram of a structure of a simplified access network device. The access network device includes a radio frequency signal receiving/sending and conversion part, and a part 1102. The radio frequency signal receiving/sending and conversion part further includes a transceiver unit 1101. The radio frequency signal receiving/sending and conversion part is mainly configured to: perform radio frequency signal receiving and sending and perform conversion between a radio frequency signal and a baseband signal. The part 1102 is mainly configured to: perform baseband processing, control the access network device, and the like. The transceiver unit 1101 may also be referred to as a receiver/transmitter (sender), a receiver/transmitter machine, a receiver/transmitter circuit, or the like. The part 1102 is usually a control center of the access network device, may be usually referred to as a processing unit, and is configured to control the access network device to perform steps performed by the access network device in FIG. 7. For details, refer to the foregoing descriptions of the related parts. The transceiver unit 1101 may be configured to implement a function of the transceiver unit 901 in the embodiment shown in FIG. 9. The part 1102 is configured to implement a function of the processing unit 902 in the embodiment shown in FIG. 9.

The part 1102 may include one or more boards. Each board may include one or more processors and one or more memories. The processor is configured to read and execute a program in the memory to implement a baseband processing function and control the access network device. If there are multiple boards, the boards may be interconnected with each other to improve a processing capability. In an optional implementation, the multiple boards may share one or more processors, or the multiple boards share one or more memories, or the multiple boards share one or more processors at the same time.

For example, in an embodiment, the transceiver unit 1101 is configured to perform functions performed by the access network device in step S701 and step S702 in the embodiment shown in FIG. 7. The part 1102 is configured to perform step S703 in the embodiment shown in FIG. 7.

According to the information transmission apparatus provided in this embodiment of this application, the apparatus sends the reporting indication information, where the reporting indication information indicates the reporting precision. The terminal reports the first information based on the reporting mode and/or the reporting indication information, so that information can be reported in a timely manner. This reduces waiting time of the apparatus, and reduces discarding of reporting of the terminal.

An embodiment of this application further provides a computer-readable storage medium. The computer-readable storage medium stores a computer program or instructions. When the computer program or the instructions are executed, the method in the foregoing embodiment is implemented.

An embodiment of this application further provides a computer program product including instructions. When the instructions are run on a computer, the computer is enabled to perform the method in the foregoing embodiment.

An embodiment of this application further provides a communication system, including the foregoing information transmission apparatus.

It should be noted that foregoing units or one or more of the foregoing units may be implemented by software, hardware, or a combination of software and hardware. When the foregoing units or any one of the foregoing units is implemented by software, the software exists in a form of computer program instructions, and is stored in the memory. The processor may be configured to execute the program instructions and implement the foregoing method procedures. The processor may be built in a system on chip (system on chip, SoC) or an ASIC, or may be an independent semiconductor chip. In addition to a core that is configured to execute software instructions to perform operation or processing, the processor may further include a necessary hardware accelerator, such as a field programmable gate array (field programmable gate array, FPGA), a programmable logic device (programmable logic device, PLD), or a logic circuit that implements special logic operation.

When the foregoing units or modules are implemented by using hardware, the hardware may be any one or any combination of a CPU, a microprocessor, a digital signal processor (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a chip system, including: at least one processor and an interface. The at least one processor is coupled to a memory through the interface. When the at least one processor executes a computer program or instructions in the memory, the chip system is enabled to perform the method in any one of the foregoing method embodiments. Optionally, the chip system may include a chip, or may include a chip and another discrete component. This is not specifically limited in embodiments of this application.

It should be understood that unless otherwise specified, "/" in descriptions of this application represents an "or" relationship between associated objects. For example, A/B may indicate A or B. A and B may be singular or plural. In addition, in the descriptions of this application, "multiple" means two or more than two unless otherwise specified. "At least one of the following items (pieces)" or a similar expression thereof means any combination of these items, including a single item (piece) or any combination of multiple items (pieces). For example, at least one item (piece) of a, b, or c may represent: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

All or some of the foregoing embodiments may be implemented by using software, hardware, firmware, or any combination thereof. When a software program is used to implement embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement multiple functions enumerated in the claims. Some measures are recorded in dependent claims that are different from each other, but this does not mean that these measures cannot be combined to produce a better effect.

## Claims

1. An information transmission method, wherein the method comprises:
obtaining reporting indication information, wherein the reporting indication information indicates reporting precision; and
reporting first information based on a reporting mode and/or the reporting indication information, wherein
the reporting mode comprises an incremental reporting mode.

2. The method according to claim 1, wherein the reporting precision indicates quantization precision of the first information.

3. The method according to claim 2, wherein the first information is quantized in at least one of the following manners: a quantity of digits after a decimal point of a value of the first information, and a quantity of bits used to represent the first information.

4. The method according to any one of claims 1 to 3, wherein the reporting indication information indicates a first correspondence between one or more pieces of reporting precision and one or more application conditions of the reporting precision; and
the method further comprises:
determining the reporting precision of the first information based on the first correspondence and an application condition of first reporting precision.

5. The method according to claim 4, wherein the application condition of the reporting precision comprises at least one of the following: a channel status of a terminal, power information of the terminal, computing power of the terminal, and load information of the terminal.

6. The method according to any one of claims 1 to 5, wherein the reporting mode further comprises a one-time reporting mode, and the one-time reporting mode indicates to report the first information once.

7. The method according to any one of claims 1 to 6, wherein the reporting indication information further indicates a quantization error threshold, and the method further comprises: when an error between a quantized value and an actual value of the first information is greater than or equal to the quantization error threshold, reporting exception information; or
the reporting indication information further indicates a quantization error threshold and an exception proportion threshold, and the method further comprises: when a proportion of information quantized as abnormal in multiple pieces of to-be-reported first information exceeds the exception proportion threshold, reporting the exception information, wherein if an error between a quantized value and an actual value of any one of the multiple pieces of first information is greater than or equal to the quantization error threshold, quantization is abnormal, wherein
the quantized value is a value obtained by processing the first information based on the reporting precision.

8. The method according to any one of claims 1 to 7, wherein the reporting mode is the incremental reporting mode, the first information comprises basic information and at least one piece of incremental information, and the reporting indication information further indicates at least one of the following incremental reporting parameters: a quantity of training rounds of a model, reporting precision of the basic information, a quantity of reporting times of incremental reporting, reporting precision of incremental information reported each time, reporting duration, a quantization error threshold corresponding to the basic information, and a quantization error threshold corresponding to each of the at least one piece of incremental information.

9. The method according to claim 8, wherein the incremental information reported each time is related to importance and/or a priority of the first information.

10. The method according to claim 8 or 9, wherein the reporting first information based on a reporting mode and/or the reporting indication information comprises:
reporting the basic information of the first information based on the reporting precision of the basic information; and
reporting the at least one piece of incremental information of the first information in sequence based on the reporting precision of the incremental information reported each time, wherein a quantity of reporting times of the at least one piece of incremental information is less than or equal to the quantity of reporting times of the incremental reporting indicated by the reporting indication information.

11. The method according to any one of claims 8 to 10, wherein the reporting first information based on a reporting mode and/or the reporting indication information comprises:
starting a timer, wherein duration of the timer is the reporting duration;
reporting the basic information of the first information based on the reporting precision of the basic information; and
reporting, within the reporting duration, the at least one piece of incremental information of the first information in sequence based on the reporting precision of the incremental information reported each time.

12. The method according to claim 11, wherein when the timer stops timing, the method further comprises at least one of the following:
stopping reporting the basic information of the first information;
stopping reporting the at least one piece of incremental information of the first information;
discarding the basic information that is of the first information and that has been processed but has not been reported; or
discarding the at least one piece of incremental information that is of the first information and that has been processed but has not been reported.

13. The method according to any one of claims 1 to 12, wherein the method further comprises:
receiving configuration information, wherein the configuration information comprises a second correspondence between one or more reporting modes and one or more mode application conditions; and
determining, based on the second correspondence and a first mode application condition, the reporting mode corresponding to the first mode application condition.

14. An information transmission method, wherein the method comprises:
sending reporting indication information, wherein the reporting indication information indicates reporting precision;
receiving reported first information, wherein the first information is reported based on a reporting mode and/or the reporting indication information; and
processing the first information based on the reported first information.

15. The method according to claim 14, wherein the reporting precision indicates quantization precision of the first information.

16. The method according to claim 14, wherein the first information is quantized in at least one of the following manners: a quantity of digits after a decimal point of a value of the first information, and a quantity of bits used to represent the first information.

17. The method according to any one of claims 14 to 16, wherein the reporting indication information indicates a first correspondence between one or more pieces of reporting precision and one or more application conditions of the reporting precision.

18. The method according to claim 17, wherein the application condition of the reporting precision comprises at least one of the following: a channel status of a terminal, power information of the terminal, computing power of the terminal, and load information of the terminal.

19. The method according to any one of claims **14** to 18, wherein the reporting mode further comprises a one-time reporting mode, and the one-time reporting mode indicates to report the first information once.

20. The method according to any one of claims **14** to 19, wherein the reporting indication information further indicates a quantization error threshold, and the method further comprises: when an error between a quantized value and an actual value of the first information is greater than or equal to the quantization error threshold, receiving reported exception information; or
the reporting indication information further indicates a quantization error threshold and an exception proportion threshold, and the method further comprises: when a proportion of information quantized as abnormal in multiple pieces of to-be-reported first information exceeds the exception proportion threshold, receiving reported exception information, wherein if an error between a quantized value and an actual value of any one of the multiple pieces of first information is greater than or equal to the quantization error threshold, quantization is abnormal, wherein
the quantized value is a value obtained by processing the first information based on the reporting precision.

21. The method according to any one of claims **14** to 20, wherein the reporting mode is an incremental reporting mode, the first information comprises basic information and at least one piece of incremental information, and the reporting indication information further indicates at least one of the following incremental reporting parameters: a quantity of training rounds of a model, reporting precision of the basic information, a quantity of reporting times of incremental reporting, reporting precision of incremental information reported each time, reporting duration, a quantization error threshold corresponding to the basic information, and a quantization error threshold corresponding to each of the at least one piece of incremental information.

22. The method according to claim 21, wherein the incremental information reported each time is related to importance and/or a priority of the first information.

23. The method according to claim 8 or 9, wherein the reporting first information based on a reporting mode and/or the reporting indication information comprises:
receiving the reported basic information of the first information based on the reporting precision of the basic information; and
receiving, based on the reporting precision of the incremental information reported each time, the at least one piece of incremental information that is of the first information and that is reported in sequence, wherein a quantity of reporting times of the at least one piece of incremental information is less than or equal to the quantity of reporting times of the incremental reporting indicated by the reporting indication information; and
the processing the first information based on the reported first information comprises:
combining the received basic information of the first information and the received at least one piece of incremental information of the first information.

24. The method according to claim 23, wherein the method further comprises:
processing, based on reporting precision corresponding to multiple pieces of first information reported by multiple terminals and weights corresponding to the reporting precision, the multiple pieces of first information reported by the multiple terminals.

25. The method according to any one of claims **14** to 24, wherein the method further comprises:
sending configuration information, wherein the configuration information comprises a second correspondence between one or more reporting modes and one or more mode application conditions.

26. An information transmission apparatus, comprising a function or a unit configured to perform the method according to any one of claims 1 to 25.

27. An information transmission apparatus, comprising a processor and an interface circuit, wherein the interface circuit is configured to: receive a signal from an apparatus other than the information transmission apparatus and transmit the signal to the processor, or send a signal from the processor to an apparatus other than the information transmission apparatus; and the processor is configured to implement the method according to any one of claims 1 to 25 by using a logic circuit or by executing code instructions.

28. A communication system, comprising the information transmission apparatus according to claim 26.

29. A chip, used in a terminal, wherein the chip is configured to perform the method according to any one of claims 1 to 13.

30. A chip, used in an access network device, wherein the chip is configured to perform the method according to any one of claims 14 to 25.

31. A chip module, used in a terminal, and comprising a transceiver component and a chip, wherein the chip is configured to perform the method according to any one of claims 1 to 13.

32. A chip module, used in an access network device, and comprising a transceiver component and a chip, wherein the chip is configured to perform the method according to any one of claims 14 to 25.

33. A computer-readable storage medium, wherein the storage medium stores a computer program or instructions, and when the computer program or the instructions are executed by an information transmission apparatus, the method according to any one of claims 1 to 25 is implemented.

34. A computer program product, wherein when the computer program product runs on a computer, the method according to any one of claims 1 to 25 is performed.
